# FASCICULE DE BREVET EUROPEEN

(11) **EP 0 848 814 B1**
(45) Date de publication et mention de la délivrance du brevet: **03.12.2003**
(21) Numéro de dépôt: 96930199.3
(22) Date de dépôt: 03.09.1996
(51) Int. Cl.: G01N 21/76, G01N 21/25

(54) **LUMINOMETRE NOTAMMENT POUR ANALYSES MEDICALES**
LUMINESZENZ MESSVORRICHTUNG, INSBESONDERE ZUR MEDIZINISCHEN ANALYSE
LUMINOMETER, PARTICULARLY FOR MEDICAL ASSAYS

(30) Priorité: 04.09.1995 FR 9510503
(43) Date de publication de la demande: 24.06.1998
(73) Titulaire: SFRI DIAGNOSTICS, 33127 Saint Jean D'Illac (FR)
(72) Inventeur: COEURVEILLE, Michel, F-33127 Saint-Jean-d'Illac (FR)
(74) Mandataire: Thébault, Jean-Louis
(86) Numéro de dépôt international: FR9601344
(87) Numéro de publication internationale: WO97009610

(56) Documents cités:
- EP-A- 0 194 102
- EP-A- 0 286 119
- EP-A- 0 523 521
- WO-A-93/22657
- WO-A-95/11441

## Description

La présente invention a pour objet un luminomètre destiné plus particulièrement à l'analyse rapide d'un très grand nombre d'échantillons de petits volumes, notamment dans le domaine des analyses médicales.

Le luminomètre de la présente invention a aussi pour but d'être intégré dans la tête mobile d'un appareil d'analyse à fonctions multiples.

On connaît des luminomètres permettant la mesure de la lumière émise durant des réactions chimiques au sein d'échantillons contenus dans des plaques notamment dites de microtitration.

C'est ainsi que dans la demande de brevet **US-A-5 290 513**, il est décrit un luminomètre comprenant :
- un socle avec un capotage,
- une première platine mobile suivant l'axe horizontal X, prévue pour recevoir une plaque de microtitration dans les puits de laquelle sont répartis les échantillons de produit à analyser.
- une seconde platine mobile suivant l'axe horizontal Y, supportant un capteur comportant un corps, une tête disposée au bout d'un bras relié audit corps, le corps étant articulé autour d'un axe tel un bras de tourne-disque avec des moyens de rappel élastique destinés à presser la tête vers le bas, dans la direction Z.

Ce luminomètre est également équipé d'un masque fixe de guidage et d'occultation. Ce masque comprend une rainure centrale orientée suivant l'axe Y, en sorte de guider la tête qui est plaquée par les moyens de rappel élastique contre le masque et plus particulièrement dans la rainure, lorsque la tête est déplacée suivant l'axe Y.

Un manchon d'étanchéité complète la liaison entre la tête et la rainure pour éviter la pénétration de photons parasites.

Le fonctionnement de cet appareil est le suivant :
- mise en place d'une plaque d'échantillons, le bras étant relevé et donc la tête étant effacée,
- abaissement du bras et de la tête dans la rainure,
- déplacement de la plaque pas à pas suivant l'axe des X pour analyser tous les échantillons d'une rangée, déplacement de la tête suivant l'axe des Y, d'un pas pour analyser tous les échantillons de la rangée suivante et ainsi de suite.

Un tel système permet de plaquer la tête avec une pression donnée sur le masque assurant ainsi une bonne étanchéité mais ce problème est en fait reporté à l'interface entre la plaque et le masque.

Aussi cette antériorité propose de presser la plaque de microtitration sur la face inférieure du masque en interposant un peu de mousse entre la plaque de microtitration et la platine qui la supporte, ce qui reste aléatoire sur une si grande surface sans compter que le pouvoir de rappel d'une mousse est difficilement contrôlable sur toute sa surface.

On remarque en outre que le capteur est éloigné du lieu de mesure d'une distance égale à la longueur du bras, distance qui peut difficilement être réduite puisqu'il faut pouvoir accéder à la totalité de la surface de la plaque de microtitration, aussi est-il prévu l'interposition d'une liaison par fibre optique.

Les pertes et les défauts engendrés par cette liaison sont non négligeables.

On constate qu'un tel appareil résout des problèmes mais en engendre d'autres. Par contre, on peut reconnaître une certaine compacité, ce qui est un avantage appréciable dans les laboratoires d'analyses et cet avantage doit être préservé et même amélioré pour les appareils à venir.

Une autre demande de brevet EP-A-181 060 décrit une tête de mesure permettant de réaliser l'étanchéité avec la plaque support d'échantillons. Dans ce mode de réalisation, le capteur est également distant de la tête de mesure et surtout la plaque support d'échantillons est spécifique, ce qui va à l'encontre d'une certaine standardisation.

Enfin, on peut noter qu'il n'est pas suggéré, dans cette demande, de moyens de déplacement en coordonnées de la tête par rapport à la plaque support d'échantillons.

L'art antérieur est également illustré par la demande internationale WO93/22657.

Cette demande présente un luminomètre équipé d'une table qui porte les échantillons à analyser, déplacable suivant l'axe des X. Un chariot porte une cellule de mesure de luminométrie.

Des moyens permettent de plaquer la cellule de mesure sur les échantillons. Il s'agit d'un amortisseur qui autorise une mobilité suivant l'axe Z mais sans moyens de déplacement de la cellule suivant l'axe Z. On note que l'amortisseur utilise un joint qui glisse à la surface des puits d'échantillons et qui travaille au cisaillement, ce qui n'est pas satisfaisant.

De plus, le frottement peut provoquer des pollutions d'un puit à l'autre par entraînement d'éventuelles traces à la périphérie des puits.

Le but de la présente invention est de pallier les inconvénients des luminomètres de l'art antérieur en disposant un capteur de mesure directement sur un support déplaçable au moins en Z de façon qu'il vienne se plaquer directement sur des cuves de réaction comme les puits d'une plaque de microtitration ou sur tout autre contenant à faible volume. Ce type de capteur, développé et utilisé dans d'autres applications notamment pour la transmission par fibres optiques, est résistant aux vibrations, aux accélérations et aux microchocs engendrés par des déplacements à grande vitesse. Sa sensibilité n'est pas nécessairement aussi importante que celle des capteurs du type à photomultiplicateur par réflexion mais elle est compensée, de toutes les façons, par la proximité du capteur par rapport à la source d'émission, par le fait que la liaison est une transmission d'un signal électrique et non plus d'une signal lumineux puisque le signal est transformé dans le capteur lui-même et aussi par le fait que, comme dans l'art antérieur, on s'affranchit des perturbations engendrées par des photons extérieurs ou simplement émis par les échantillons adjacents, dite cross contamination.

L'invention a également pour objet l'intégration d'un tel luminomètre dans la tête de travail d'un appareillage particulier assurant également la mesure de plusieurs paramètres ayant fait l'objet d'un dépôt de brevet au nom du présent demandeur et portant le numéro EP-A-92/450 011. Cet appareil, à très grandes performances, dispose d'une tête à très grande vitesse de déplacement conduisant à des accélérations de l'ordre de 2 g.

A cet effet, le luminomètre selon l'invention comprend un châssis protégé par un capotage dont l'intérieur est accessible à travers un volet de fermeture, un capteur de mesure de photons avec une fenêtre de mesure, une platine support de plaques d'échantillons, fixe ou avec des moyens pour déplacer ladite platine dans un système d'axes orthogonaux X, Y et Z, orienté de préférence mais non nécessairement avec l'axe Z vertical, suivant au moins l'un des axes du plan X ou Y, un module électronique d'amplification et de numérisation des données et un module électronique de traitement de ces données et ce luminomètre se caractérise en ce que le capteur de mesure est mobile et en ce qu'il comprend des moyens de déplacement en translation de ce capteur au moins suivant l'axe des Z.

Selon un mode de réalisation préférentiel, le châssis est équipé de moyens de déplacement en translation uniquement suivant l'un des axes du plan, l'axe Y, et le capteur et les moyens de déplacement en translation suivant l'axe des Z sont portés par des moyens de déplacement en translation suivant l'autre des axes des plans, l'axe X.

Plus particulièrement, les moyens de déplacement en Z comprennent un chariot monté coulissant sur un rail orienté suivant l'axe Z et un moteur avec un codeur intégré solidaire d'un bâti, entraînant une came en rotation prévue pour assurer ledit déplacement en translation, ce bâti étant porté par un chariot monté coulissant sur un rail, supporté par une poutre encastrée à l'une de ses extrémités, orienté suivant l'axe X, ledit chariot étant entraîné par un ensemble d'une courroie tendue entre un galet et une poulie d'un moteur avec un codeur intégré.

Il est en outre prévu une butée à l'une des extrémités du déplacement en X, équipée d'un capteur de fin de course permettant une initialisation des déplacements, d'un puits noir permettant de garer le capteur à l'abri des perturbations parasites et d'une lampe de calibrage disposée dans ledit puits noir permettant d'étalonner au besoin le capteur.

Selon un mode de réalisation particulier, le module électronique d'amplification et de numérisation des données est porté par les moyens de déplacement en translation suivant l'axe des X et disposé à proximité immédiate du capteur.

Le capteur comprend un photomultiplicateur et un module électronique d'acquisition des mesures intégré, l'ensemble étant protégé par un blindage.

Selon un perfectionnement de l'invention, des moyens d'étanchéité et de compensation des défauts de planéité au droit de la fenêtre de mesure sont ajoutés.

L'invention concerne aussi un dispositif de mesure comprenant au moins un support de plaque de microtitration, une tête mobile, équipée de moyens de mesure de différents paramètres physico-chimiques, des moyens de déplacement en translation de ladite tête selon les axes X et Y, ce dispositif comprenant un luminomètre intégré dans la tête équipée des seuls moyens de déplacement en translation suivant l'axe des Z.

La came de déplacement du mode de réalisation précédent est remplacée par un ensemble vis/écrou.

L'invention est décrite ci-après en regard des dessins annexés sur lesquels sont représentés un mode de réalisation d'un luminomètre autonome et automatique et une tête de mesure selon l'enseignement de la demande de brevet européen ci-avant mentionnée dans laquelle est intégrée la partie capteur, les moyens de déplacement en Z d'un tel luminomètre ainsi que l'électronique d'acquisition des données, les différentes figures montrant :
- figure 1, une vue générale du luminomètre automatique et autonome selon l'invention avec son capotage,
- figure 2, une vue de dessus du luminomètre après retrait du capotage,
- figure 3, une vue en élévation latérale du luminomètre de la figure 2,

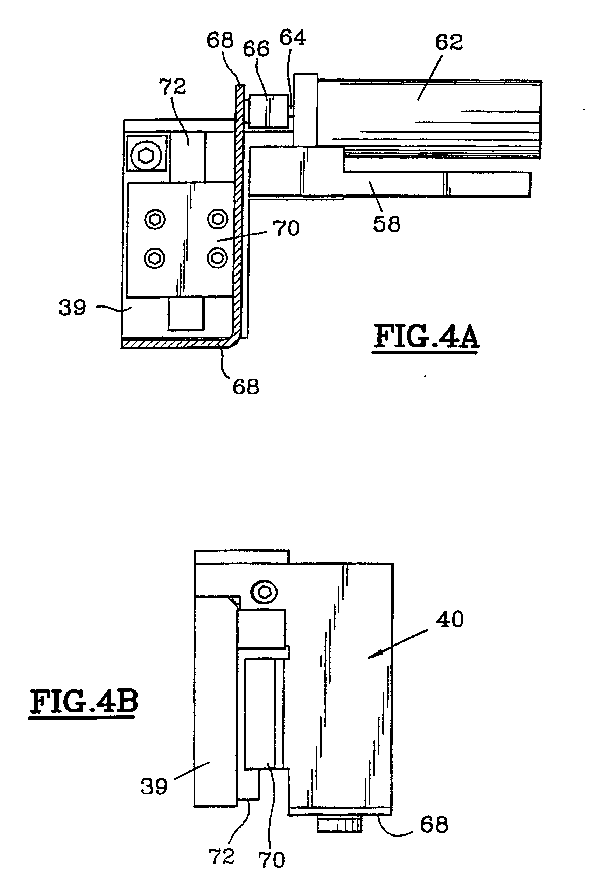

- figure 4A, une vue de détail, en coupe, perpendiculairement à l'axe des X, des moyens de déplacement en Z du capteur,
- figure 4B, une vue en élévation latérale suivant la flèche F de la figure 2, des moyens de déplacement en Z,
- figure 5, une vue de détail du capteur et du système amortisseur,
- figure 6, une vue générale de l'appareil de mesure objet de la demande de brevet EP-A-92/450 011, dénommé ALPHA 4 dans le commerce,
- figure 7, une vue schématique de l'intérieur de l'appareil de mesure de la figure 6,
- figure 8, une vue de la tête de mesure avec son carter de protection,
- figure 9, une vue du luminomètre intégré dans la tête de mesure.

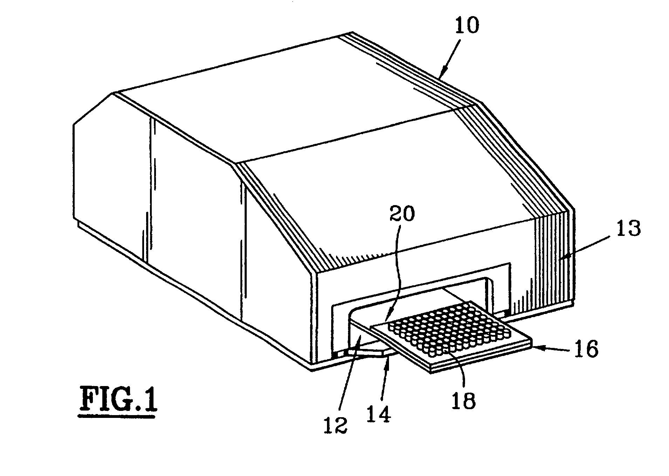

Sur la figure 1, on a représenté en perspective un luminomètre selon l'invention, tel qu'il se présente à l'utilisateur. Ce luminomètre comprend un capotage 10 sur trois de ses faces et une couverture 12 sur la face avant 13, obturée par un volet basculant 14. Sur cette figure, on a représenté également une plaque de microtitration 16 comprenant des micropuits 18, reposant sur une platine mobile 20.

Pour donner un ordre d'idée, le luminomètre présente un encombrement en longueur et en largeur, chacune sensiblement égale à deux fois les dimensions, respectivement en longueur et en largeur, d'une plaque standard d'analyse, ce qui montre la compacité d'une tel appareillage, comme cela sera confirmé par les détails ultérieurement donnés dans la description.

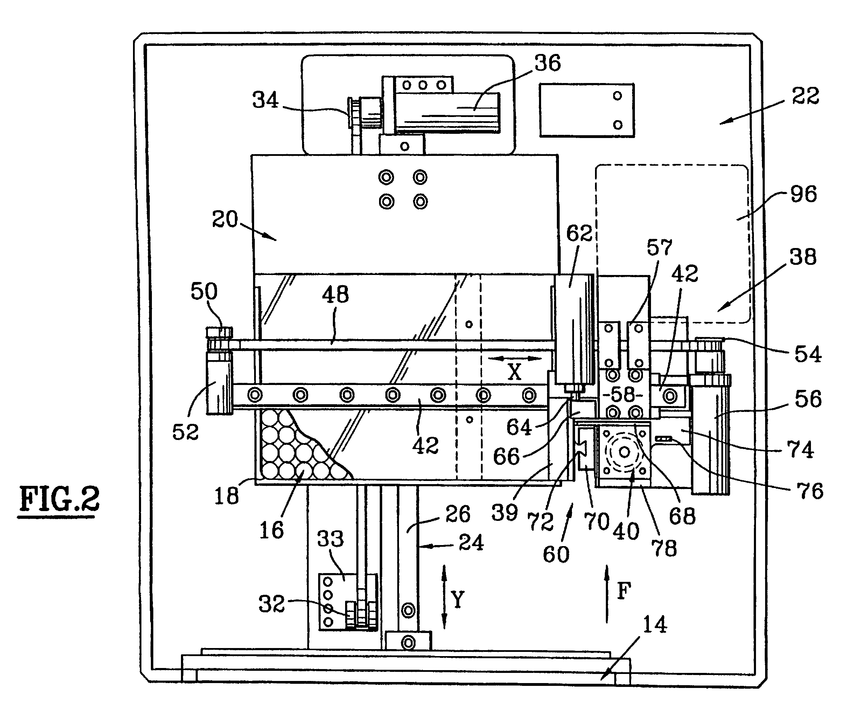

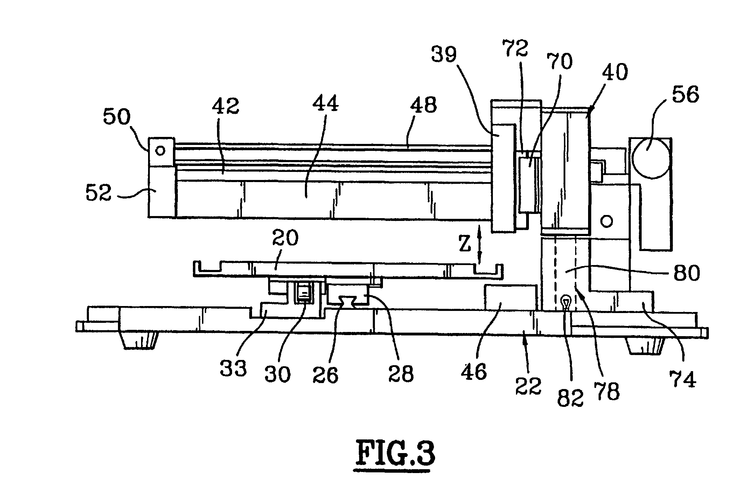

On se reporte maintenant aux figures 2 et 3 sur lesquelles les éléments identiques portent les mêmes références, ces figures montrant l'intérieur du luminomètre de la figure 1.

Le luminomètre comprend un châssis 22 comprenant des premiers moyens de déplacement en translation 24, suivant l'axe des Y.

Ces premiers moyens 24 comprenant, dans le mode de réalisation non limitatif présenté, un rail de guidage 26 sur lequel est monté coulissant un chariot 28 (voir figure 3), solidaire de la platine 20, support de plaque de microtitration 16.

Un ensemble d'une courroie 30, tendue entre un galet 32 porté par une embase 33 et la poulie d'entraînement 34 d'un moteur 36 avec un codeur intégré, coopère avec le chariot 28 en sorte de déplacer ce dernier sur le rail 26 suivant un mouvement de translation dans les deux sens, symbolisé par une flèche, avec des déplacements parfaitement contrôlés.

Il est également prévu des deuxièmes moyens de déplacement en translation 38, suivant l'axe des X, prévus pour assurer le déplacement d'un bâti 39 supportant un capteur 40, symbolisé par une double flèche sur la figure 2.

Ces moyens de déplacement 38 comprennent un rail 42 fixé sur une poutre 44 de grande rigidité, solidarisée au châssis 22 par un pied 46 et un ensemble d'une courroie 48, tendue entre un galet 50 porté par une embase 52 et la poulie d'entraînement 54 d'un moteur 56 avec un codeur intégré.

Un chariot 58 est solidarisé à la courroie 48 par des pinces 57 liées audit chariot en sorte de déplacer ce dernier sur le rail 42 suivant un mouvement de translation en X dans les deux sens avec des déplacements parfaitement contrôlés.

Le chariot 58 porte le bâti 39 sur lequel sont rapportés des troisièmes moyens de déplacement en translation 60, suivant l'axe des Z.

Ces troisièmes moyens de déplacement en translation 60 comprennent un moteur 62 avec un codeur intégré, dont l'arbre de sortie 64 est fixé à une came 66 qui actionne une platine mobile 68 sur laquelle est rapporté le capteur 40.

La platine 68 est solidaire d'un chariot 70, monté coulissant sur un rail 72 porté par le bâti 39.

Les déplacements suivant l'axe Z sont de faible amplitude.

Le châssis est de plus équipé d'une butée 74, équipée d'un témoin de fin de course 76, permettant de faire le zéro.

Au niveau de cette butée, l'appareil est en outre équipé de moyens de calibrage 78 schématiquement représentés sur la figure comme un puits 80 et une lampe 82. Le puits est en effet un simple logement borgne sur lequel vient reposer le capteur lors du retour en position neutre, en sorte que ledit capteur ne soit pas perturbé par les excès de lumière provenant de l'extérieur ainsi que cela sera décrit plus avant dans la description. La lampe est au contraire une source de lumière constante, à l'abri de toute perturbation extérieure, au fond du puits, qui permet de réinitialiser le capteur lorsque cela est nécessaire pour compenser les éventuelles dérives.

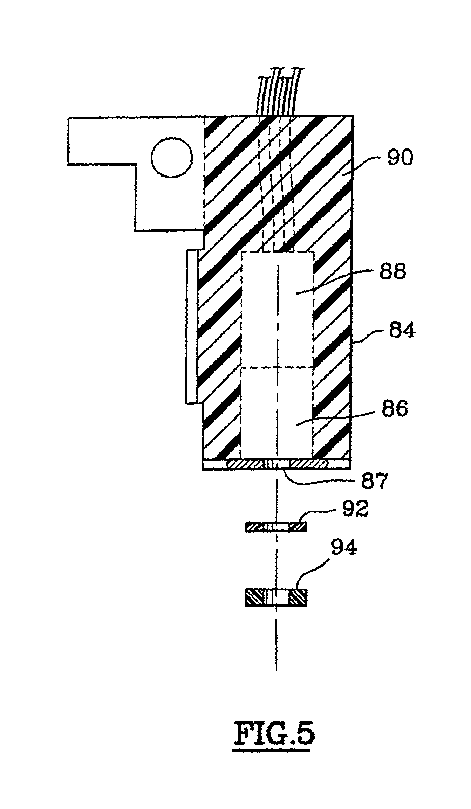

Sur la figure 5, on retrouve le capteur 40, isolé. Ce capteur est schématiquement représenté avec un carter 84, une partie optique de type photomultiplicateur 86 avec une fenêtre 87, une partie électronique 88 pour l'acquisition des mesures et une grosse partie à base de résine 90 assurant un blindage efficace.

Un tel capteur est notamment vendu par la société HAMAMATSU. Ce capteur dispose de temps de réponse rapide, d'une sensibilité de mesure suffisante, il est quasiment insensible aux perturbations magnétiques et électromagnétiques, même de forte puissance, et surtout il est insensible aux vibrations et aux accélérations engendrées par des déplacements mécaniques.

Sur cette même figure 5, on a montré aussi une d'adaptation pour l'application envisagée, à savoir, une superposition d'une première rondelle 92, en matériau souple tel qu'une mousse et une seconde rondelle 94 en matériau polymère mais de plus grande dureté, prévue pour venir au contact des micropuits ou des tubes, ces rondelles étant centrées par rapport à la fenêtre 87 de mesure du capteur.

Cet ensemble permet de rattraper les défauts de planéité des micropuits par rapport au capteur en faisant une étanchéité quasi parfaite ente le micropuits et le capteur en sorte de supprimer la contamination lumineuse de la mesure par une source extérieure. Ce montage simple est tout à fait applicable pour cette faible surface. On remarque aussi que le matériau le plus dur est à proximité du produit à analyser ce qui est un gage de propreté car il reste intègre après de multiples contacts, ce qui ne pourrait être garanti avec une rondelle en mousse uniquement.

Le luminomètre est complété par un ensemble électronique de traitement des informations avec mémoire, non représenté, seul le module d'amplification du signal 96 est symbolisé en trait mixte sur la figure 2, car ce module pour des raisons de gain de sensibilité est embarqué et porté par le chariot 58. En effet, il faut diminuer le plus possible les liaisons par câbles entre le capteur et cet amplificateur, le signal numérisé de sortie de ce module pouvant, lui, être transporté sans problème.

Le fonctionnement est indiqué ci-après en regard du mode de réalisation représenté sur les différentes figures, mais il correspond aussi, dans sa généralité, au fonctionnement du luminomètre une fois intégré dans un autre dispositif comme indiqué plus avant.

L'utilisateur souhaitant réaliser des mesures de luminométrie sur des milieux biologiques prépare tout d'abord sa plaque de microtitration avec les micropuits dans lesquels il dispose les produits à étudier.

Il introduit ensuite sa plaque à travers l'ouverture 12 pour la placer sur la platine mobile 20, qui est en saillie pour faciliter ce positionnement.

On peut remarquer que les mesures de photons émis par le milieu réactionnel sont possibles pendant des durées suffisamment longues car les réactions sont lentes et surtout ce qui importe souvent, c'est de relever la cinétique de réaction plus qu'une mesure flash.

Les mesures sont ensuite lancées dans un ordre préprogrammé qui n'intéresse pas directement l'invention. Par contre, les déplacements d'un micropuits à un autre sont toujours identiques. Les moteurs 36 et 56 sont alimentés et contrôlés par les codeurs pour positionner le capteur au droit d'un micropuits donné. Dès que le capteur est au droit de ce micropuits, le moteur 62 est alimenté pour abaisser le capteur 40 suivant l'axe des Z. L'amplitude du mouvement est connue et les écarts sont compensés par les rondelles 92 et 94. La fenêtre 87 du capteur se trouve centrée sur le micropuits et toute contamination par les photons émis par les micropuits adjacents est supprimée.

La détermination de la hauteur de chaque puits par le codeur associé au moteur 62 permet si nécessaire un traitement individualisé et adapté pour chaque puits et l'utilisation possible de diverses plaques et puits ainsi qu'un contrôle de la présence de puits.

La mesure est réalisée et les résultats acquis sont traités et transférés dans la mémoire associée pour une sortie papier et/ou une analyse ultérieure.

Le capteur ayant une faible durée de rémanence, il est quasi immédiatement prêt pour une nouvelle mesure. L'intervalle de temps entre deux mesures est de l'ordre de la seconde, pour donner une idée.

Les différentes mesures sont ainsi conduites les unes après les autres.

Une fois l'ensemble des micropuits parcouru, le capteur est ramené au droit de la butée 78 et abaissé pour être plaqué sur le puits de garage 80. Un contrôle de dérive peut être réalisé en initialisant le capteur. Il suffit d'allumer la lampe et de réaliser une mesure des photons émis dont la quantité est parfaitement connue.

On peut remarquer que l'utilisation du type de capteur compact et spécifique tel qu'indiqué précédemment conduit à de nombreux avantages, notamment la compacité, la simplicité donc la fiabilité, la bonne sensibilité puisque la détection des photons est effectuée directement au-dessus du produit puis amplifiée immédiatement après, au sein même du capteur, sans avoir besoin de conduire les photons vers un photomultiplicateur plus éloigné avec les pertes et perturbations que cela est susceptible d'engendrer.

On peut bien entendu réaliser les déplacements de la platine mobile support de plaque de microtitration en X et en Y directement et ne laisser subsister que le mouvement en Z mais cela conduit à un dispositif plus encombrant et un peu plus complexe dans le positionnement des divers éléments, c'est pour cela que l'agencement décrit précédemment est considéré comme le meilleur mode de réalisation.

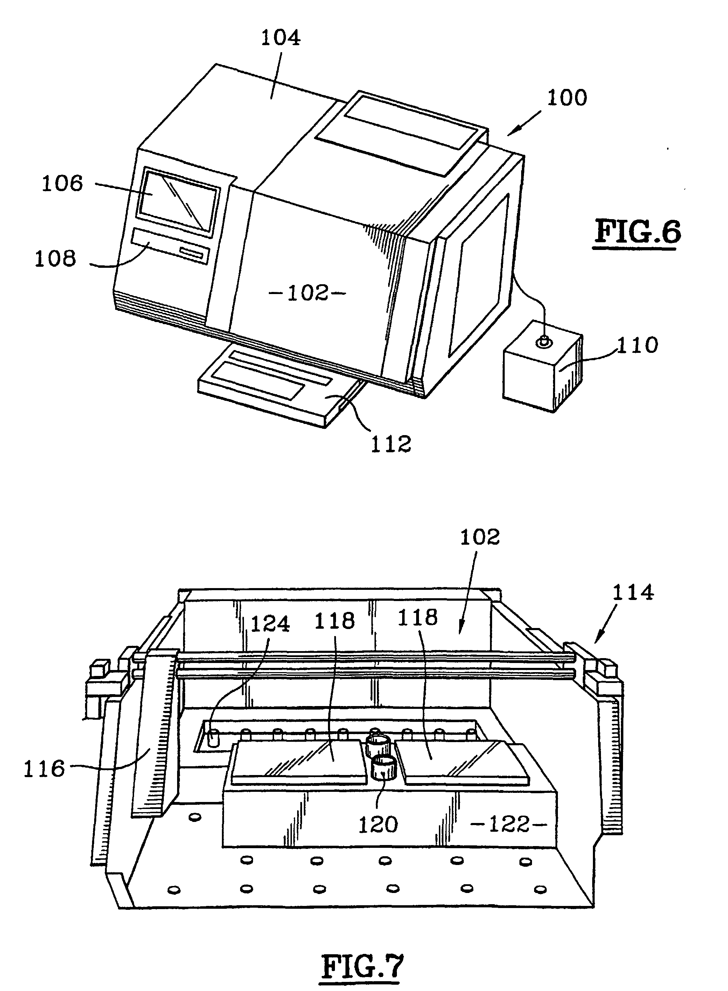

Sur la figure 6, on a représenté un dispositif de mesure décrit dans la demande de brevet européen EP-A-92/450 011, dispositif dans lequel est intégré le luminomètre selon l'invention, en sorte d'augmenter ses capacités.

Ce dispositif comprend un capotage 100 protégeant la zone de mesure 102 proprement dite, un module électronique 104 intégré avec un écran de visualisation 106 et une unité mémoire avec un lecteur de disquette 108, un récipient à déchets 110 ainsi qu'un clavier de commande 112.

La zone de mesure 102 comprend une table X-Y 114 permettant le déplacement d'une tête 116 de mesure portant les différents instruments de prélèvement et d'analyse.

Sensiblement au centre de la zone de mesure, on a disposé des supports 118 de plaques de microtitration ainsi que 'orifice d'injection 120 d'échantillons d'un spectrophotomètre, non représenté, et logé dans le socle 122.

On a également représenté de façon schématique des éléments mécaniques pour positionner des contenants de réactifs par exemple, sous référence 124.

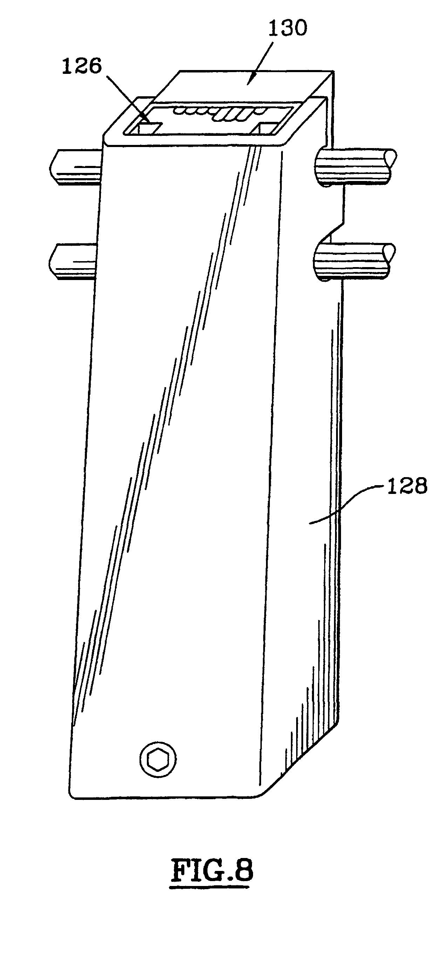

Sur la figure 8, on a montré la tête proprement dite 116 qui comprend une face 126 avant avec un carter transparent 128 et une face arrière 130 dans laquelle, selon le mode de réalisation retenu, on a logé et intégré le luminomètre selon l'invention.

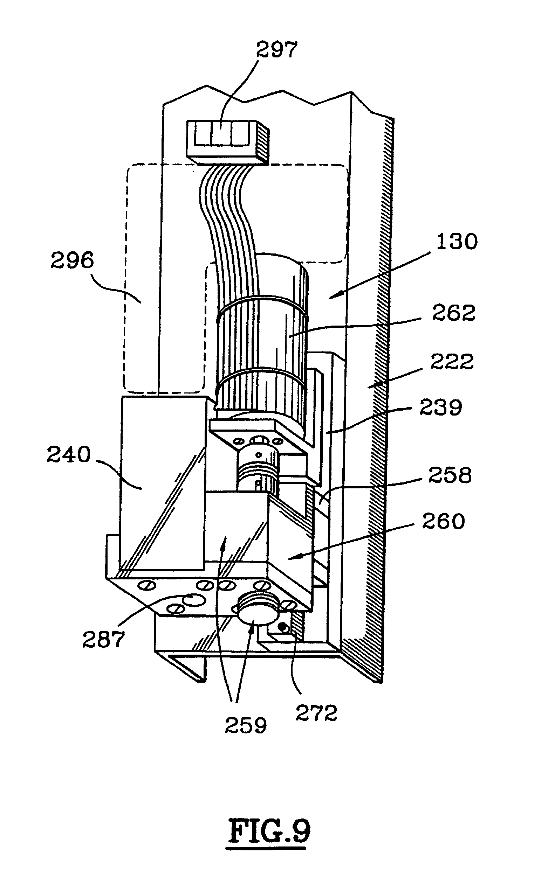

C'est cette face arrière 130 qui est montrée en détail sur la figure 9.

Les mouvements en X-Y sont déjà réalisés pour le positionnement de la tête si bien que sur la figure 9, seuls les moyens de déplacement en translation suivant l'axe Z sont montrés.

Pour la suite de la description et par analogie avec le premier mode de réalisation, on référence les éléments identiques ou pour le moins qui jouent le même rôle avec des références identiques mais en ajoutant 200.

Les moyens 260 de déplacement en translation suivant l'axe Z comprenant une embase 239 supportant un rail 272 orienté verticalement et solidarisée au châssis 222 de la tête.

Un chariot 258 est monté mobile en translation sur ledit rail et comprend en outre un ensemble vis-écrou 259, la vis étant entraînée par un moteur 262 solidaire du châssis 222.

Le chariot porte comme précédemment un capteur 240.

Le module d'amplification du signal 296 est disposé à proximité immédiate du capteur, directement sur le châssis 222 de la tête et l'ensemble des connexions est référencé 297.

On peut remarquer l'extrême compacité de l'ensemble puisque la section transversale de la tête est de l'ordre de 5 cm.

Le type de capteur utilisé permet de supporter des accélérations de 2 g auxquelles la tête est soumise. Ces accélérations importantes sont dues au fait qu'il y a de la place dans le dispositif de mesure de la figure 6 pour disposer une table X-Y puissante afin d'effectuer des déplacements d'une distance relativement importante avec des durées très courtes et on peut remarquer que dans ce cas, les mouvements X-Y sont combinés, ce qui conduit à des déplacements curvilignes de la tête.

Le fait de disposer un luminomètre sur la tête mobile permet de mesurer directement les photons émis par les cuves de réaction alors que la spectrophotométrie effectue ses mesures sur des échantillons, résultat d'une réaction, injectés dans un réceptacle adapté.

Aussi, la mesure directe est un avantage particulièrement attractif pour les analyses biologiques, en particulier les tests hormonaux. Pour donner un ordre de grandeur de l'échelle des sensibilités, la spectrophotométrie varie de 1 à 3 000 et la luminométrie de 1 à 500 000.

On comprend là tout l'intérêt à faire déplacer le capteur en Z puisque la plaque de microtitration est, par conception même, statique et qu'il est délicat voir impossible d'envisager l'ajout de moyens de déplacement en Z.

Bien entendu, le capteur indiqué pour la réalisation du mode préférentiel peut être remplacé par tout capteur dont l'intégration et la conception permettent de s'affranchir des vibrations tout en disposant d'une sensibilité de mesure suffisante avec une bonne résistance aux perturbations extérieures d'origine magnétique ou électromagnétique, autorisant son intégration et son fonctionnement en milieu industriel.

Bien entendu, pour la simplicité de la description, on a considéré que les trois axes X,Y et Z étaient orientés avec le plan X, Y horizontal et l'axe Z vertical mais il va de soi que le repère ainsi formé peut être orienté en fonction des besoins sans que cela vienne à sortir du cadre de l'invention.

## Revendications

1. Luminomètre comprenant un châssis (22) protégé par un capotage (10) dont l'intérieur est accessible à travers un volet (14) de fermeture, un capteur (40) de mesure de photons avec une fenêtre de mesure (87), une platine (20) support de plaques d'échantillons, fixe ou avec des moyens (24, 38) pour déplacer ladite platine dans un système d'axes orthogonaux X, Y et Z, orienté de préférence mais non nécessairement avec l'axe Z vertical, suivant au moins l'un des axes du plan X ou Y, un module électronique (96) d'amplification et de numérisation des données et un module électronique de traitement de ces données, **caractérisé en ce que** le capteur (40) de mesure est mobile et **en ce que** ledit luminomètre comprend des moyens (60) de déplacement en translation de ce capteur au moins suivant l'axe des Z.

2. Luminomètre selon la revendication 1, **caractérisé en ce que** le châssis (22) est équipé de moyens (24) de déplacement en translation uniquement suivant l'un des axes du plan, l'axe Y, et **en ce que** le capteur (40) et les moyens (60) de déplacement en translation suivant l'axe des Z sont portés par des moyens (38) de déplacement en translation suivant l'autre des axes du plan, l'axe X.

3. Luminomètre selon la revendication 2, **caractérisé en ce que** les moyens (60) de déplacement en Z comprennent un chariot (70) monté coulissant sur un rail (72) orienté suivant l'axe Z et un moteur (62) avec un codeur intégré solidaire d'un bâti (39), entraînant une came (66) en rotation prévue pour assurer ledit déplacement en translation, ce bâti (39) étant porté par un chariot (58) monté coulissant sur un rail (42), supporté par une poutre (44) encastrée à l'une de ses extrémités, orienté suivant l'axe X, ledit chariot (58) étant entraîné par un ensemble d'une courroie (48) tendue entre un galet (50) et une poulie (54) d'un moteur (56) avec un codeur intégré.

4. Luminomètre selon la revendication 2 ou 3, **caractérisé en ce qu'**il comprend une butée (74) à l'une des extrémités du déplacement en X, équipée d'un capteur (76) de fin de course permettant une initialisation des déplacements, d'un puits noir (80) permettant de garer la capteur (40) à l'abri des perturbations parasites et d'une lampe (82) de calibrage disposée dans ledit puits noir permettant d'étalonner au besoin le capteur.

5. Luminomètre selon l'une quelconque des revendications 2, 3 ou 4, **caractérisé en ce que** le module électronique (96) d'amplification et de numérisation des données est porté par les moyens (42, 58) de déplacement en translation suivant l'axe des X et disposé à proximité immédiate du capteur.

6. Luminomètre selon l'une quelconque des revendications précédentes, **caractérisé en ce que** le capteur (40) comprend un photomultiplicateur (86) et un module électronique (88) d'acquisition des mesures, intégré, l'ensemble étant protégé par un blindage (90).

7. Luminomètre selon l'une quelconque des revendications précédentes, **caractérisé en ce qu'**il comprend des moyens (92, 94) d'étanchéité et de compensation des défauts de planéité au droit de la fenêtre de mesure.

8. Dispositif de mesure comprenant au moins un support (118) de plaque de microtitration, une tête mobile (116), équipée de moyens de mesure de différents paramètres physico-chimiques, des moyens (114) de déplacement en translation de ladite tête selon les axes X et Y, **caractérisé en ce qu'**il comprend un luminomètre (240, 259) intégré dans la tête selon l'une quelconque des revendications précédentes, équipé des seuls moyens (260) de déplacement en translation suivant l'axe des Z.

9. Dispositif selon la revendication 8, **caractérisé en ce que** le déplacement en Z est obtenu par des moyens (259) de déplacement en translation du type vis/écrou.

## Claims

1. Luminometer comprising a chassis (22) protected by a cowling (10) whose interior is accessible through a closure flap (14), a photon measuring sensor (40) with a measuring window (87), a sample plate support deck (20), fixed or with means (24, 38) for moving said deck within a system of orthogonal axes X, Y and Z, preferably but not necessarily oriented with the Z axis vertical, along at least one of the axes of the plane X or Y, an electronic module (96) for amplifying and digitising the data and an electronic module for processing said data, **characterised in that** the measuring sensor (40) is able to move and **in that** said luminometer comprises means (60) of moving the sensor in translation at least along the Z axis.

2. Luminometer according to claim 1, **characterised in that** the frame (22) is equipped with means (24) for moving in translation solely along one of the axes of the plane, the Y axis, and **in that** the sensor (40) and the means (60) for moving in translation along the Z axis are carried by means (38) for moving in translation along the other one of the axes of the plane, the X axis.

3. Luminometer according to claim 2, **characterised in that** the means (60) for moving on the Z axis comprise a carriage (70) mounted so as to slide on a rail (72) oriented along the Z axis and a motor (62) with an integral coder fixed to a frame (39), driving in rotation a cam (66) designed to provide the same movement in translation, the frame (39) being carried by a carriage (58) mounted so as to slide on a rail (42), supported by a beam (44) embedded at one of its ends, oriented along the X axis, the carriage (58) being driven by an assembly with a belt (48) tensioned between a roller (50) and a pulley (54) of a motor (56) with an integral coder.

4. Luminometer according to claim 2 or 3, **characterised in that** it comprises a stop (74) at one of the ends of the movement along the X axis, equipped with an end of travel sensor (76) for initiating the movements, a black hole (80) for parking the sensor (40) away from stray interference and a calibration lamp (82) disposed in said black hole for calibrating the sensor as required.

5. Luminometer according to any one of claims 2, 3 or 4, **characterised in that** the electronic module (96) for amplifying and digitising data is carried by means (42, 58) for movement in translation along the X axis and disposed in the immediate vicinity of the sensor.

6. Luminometer according to any one of the preceding claims, **characterised in that** the sensor (40) comprises a photomultiplier (86) and an integral electronic measurement acquisition module (88), the whole being protected by encapsulation (90).

7. Luminometer according to any one of the preceding claims, **characterised in that** it comprises means (92, 94) for sealing and compensating for any defects in surface evenness in line with the measuring window.

8. Measuring device comprising at least one microtitration plate support (118), a movable head (116) equipped with means for measuring different physico-chemical parameters, and means (114) for moving said head in translation along the X and Y axes, **characterised in that** it comprises a luminometer (240, 259) integrated in the head according to any one of the preceding claims, equipped with only the means (260) for moving in translation along the Z axis.

9. Device according to claim 8, **characterised in that** movement in the Z axis is obtained by means (259) for moving in translation of the nut and screw type.

## Patentansprüche

1. Luminometer, das einen Rahmen (22), der durch eine Verkleidung (10) geschützt ist, deren Innenraum durch eine Verschlußklappe (14) zugänglich ist, einen Photonenmeßsensor (40) mit einem Meßfenster (87), eine Probenplatten-Trägerplatine (20), die fixiert ist oder mit Mitteln (24, 38) versehen ist, um die Platine in einem System aus orthogonalen Achsen X, Y und Z, das vorzugsweise, jedoch nicht notwendig, mit vertikaler Z-Achse orientiert ist, wenigstens längs einer der Achsen der XY-Ebene zu verlagern, ein elektronisches Modul (96) für die Verstärkung und die Digitalisierung der Daten und ein elektronisches Modul für die Verarbeitung dieser Daten umfaßt, **dadurch gekennzeichnet, daß** der Meßsensor (40) beweglich ist und daß das Luminometer Mittel (60) für die translatorische Verlagerung dieses Sensors wenigstens längs der Z-Achse umfaßt.

2. Luminometer nach Anspruch 1, **dadurch gekennzeichnet, daß** der Rahmen (22) mit Mitteln (24) zur translatorischen Verlagerung ausschließlich längs einer der Achsen der Ebene, der Y-Achse, versehen ist und daß der Sensor (40) und die Mittel (60) zur translatorischen Verlagerung längs der Z-Achse durch Mittel (38) zur translatorischen Verlagerung längs der anderen der Achsen der Ebene, der X-Achse, getragen werden.

3. Luminometer nach Anspruch 2, **dadurch gekennzeichnet, daß** die Z-Verlagerungsmittel (60) einen Schlitten (70), der an einer längs der Z-Achse orientierten Schiene (72) gleitend angebracht ist, sowie einen Motor (62) umfassen, der einen mit einem Gestell (39) fest verbundenen integrierten Codierer aufweist, der einen Nocken (66) rotatorisch antreibt, der dazu vorgesehen ist, die translatorische Verlagerung sicherzustellen, wobei dieses Gestell (39) von einem Schlitten (58) getragen wird, der an einer Schiene (42) gleitend angebracht ist, die durch einen Träger (44) unterstützt ist, der an einem seiner Enden eingespannt ist und längs der X-Achse orientiert ist, wobei der Schlitten (58) durch eine Baueinheit aus einem Riemen (48) angetrieben wird, der zwischen einer Rolle (50) und einer Scheibe (54) eines Motors (56) mit integriertem Codierer gespannt ist.

4. Luminometer nach Anspruch 2 oder 3, **dadurch gekennzeichnet, daß** es an einem der Enden einen Anschlag (74) für die Verlagerung in X-Richtung umfaßt, der versehen ist mit einem Bahnende-Sensor (76), der eine Initialisierung der Verlagerungen ermöglicht, mit einem schwarzen Behälter (80), der ermöglicht, den Sensor (40) geschützt vor parasitären Störungen unterzubringen, und mit einer Kalibrierungslampe (82), die in dem schwarzen Behälter angeordnet ist und bei Bedarf eine Eichung des Sensors ermöglicht.

5. Luminometer nach einem der Ansprüche 2, 3 oder 4, **dadurch gekennzeichnet, daß** das elektronische Modul (96) zur Verstärkung und Digitalisierung von Daten durch die Mittel (42, 58) zur translatorischen Verlagerung längs der X-Achse getragen wird und in unmittelbarer Nähe des Sensors angeordnet ist

6. Luminometer nach einem der vorhergehenden Ansprüche, **dadurch gekennzeichnet, daß** der Sensor (40) einen Photovervielfacher (86) und ein integriertes elektronisches Modul (88) zur Erfassung von Meßwerten umfaßt, wobei die Gesamtheit durch eine Abschirmung (90) geschützt ist.

7. Luminometer nach einem der vorhergehenden Ansprüche, **dadurch gekennzeichnet, daß** es Mittel (92, 94) zur Abdichtung und zur Kompensation von Ebenheitsfehlern am Ort des Meßfensters umfaßt.

8. Meßvorrichtung, die wenigstens einen Mikrotitrationsplatten-Träger (118), einen beweglichen Kopf (116), der mit Mitteln zum Messen verschiedener physikalisch-chemischer Parameter versehen ist, und Mittel (114) zur translatorischen Verlagerung des Kopfes längs der X- und Y-Achsen umfaßt, **dadurch gekennzeichnet, daß** sie ein in den Kopf integriertes Luminometer (240, 259) nach einem der vorhergehenden Ansprüche umfaßt, das mit den einzigen Mitteln (260) zur translatorischen Verlagerung längs der Z-Achse versehen ist.

9. Vorrichtung nach Anspruch 8, **dadurch gekennzeichnet, daß** die Z-Verlagerung durch Mittel (259) zur translatorischen Verlagerung des Schrauben/Mutter-Typs erhalten wird.
